# EUROPEAN PATENT APPLICATION

(11) **EP 3 301 860 A1**
(43) Date of publication of application: **04.04.2018**
(21) Application number: 16306251.6
(22) Date of filing: 28.09.2016
(51) Int. Cl.: H04L 12/46, H04L 12/28

(54) **METHOD FOR INTERCONNECTING VIRTUAL GATEWAYS AND CORRESPONDING VIRTUAL GATEWAY**

(71) Applicant: Thomson Licensing, 92130 Issy-les-Moulineaux (FR)
(72) Inventor: BICHOT, Guillaume, 35576 CESSON-SEVIGNE (FR)
(74) Representative: Huchet, Anne

(57) **Abstract**

First network equipment (100B) comprising a first access point (202B) and configured to be attached to a first apparatus (104B) connected to a first network (105B),
wherein the first network equipment comprises at least one memory and at least one processing circuitry configured to perform:
- upon receipt of a request for attachment from the first network (105B), establishing a secure connection (101 P) between the first access point (202B) and a second access point (202A) of a second network equipment (100A) attached to a second apparatus (1 04A) of a second network (105A);
- launching one or several first proxies (203B) at the first access point (202B) of the first network equipment (100B), wherein each first proxy (203B) corresponds to a terminal (106A) of the second network (105A) and is paired with at least one second proxy (203A) launched at the second access point (202A) and corresponding to a terminal (106B) of the first network (105B).

## Description

### TECHNICAL FIELD

The present disclosure generally relates to the network virtualization and more particularly to network virtualization services and functions associated with cloud commodity computing hardware.

### BACKGROUND

This section is intended to introduce the reader to various aspects of art, which may be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

A residential or corporate gateway is a network equipment interfacing a LAN (Local Area Network) to the Internet. Such an equipment may usually provide - in addition to being a cable, DSL (Digital Subscriber Line) or fiber modem - different features like router, DNS (Domain Name System) proxy, local DHCP (Dynamic Host Configuration Protocol) server, wireless access point, firewall, DynDNS, bridge, etc.

The development of the cloud technologies (such as the virtualization of network functions) allows the emergence of a new architecture for Internet access wherein services running in the residential gateway are moved in the NSP's (Network Service Provider) datacenter. By reducing the complexity of the residential gateway, NSPs hope to reduce the time to market to deploy new services and to ease troubleshooting operations.

Networking Function Virtualization (NFV) enables the provision of network functions for home or corporate gateways directly from the NSP's facility in a cloud provisioning manner. Virtual Customer Premise Equipment (VCPE) is part of the so called Network Function Virtualization paradigm that is about executing network functions (e.g. Router, Deep Packet Inspection, DNS server, Firewall) onto commoditized hardware hosting a virtual machine infrastructure (e.g. private or public cloud infrastructure) instead of requiring specific dedicated hardware. To that end, the home gateway acts as a bridge (BRG) and needs to connect to a virtual gateway (vG) in the cloud to reach the hosts where the network functions are provisioned and run, even for basic functions such as DHCP, Firewall, DNS and UI (User Interface).

The virtual gateway simplifies a lot some of the operations involving the network service provider such as configuration and software upgrade. It also facilitates the implementation of features like inter home network connection. Nevertheless, interconnecting two home LANs together is not as simple as establishing a secure connection or a Virtual Private connection (also called VPN) as it can be desired not to connect all the devices in each of the virtual private home LANs.

### SUMMARY

The disclosure concerns a method to be implemented at a first network equipment comprising a first access point and configured to be attached to a first apparatus connected to a first network,
wherein the method comprises:
- upon receipt of a request for attachment from the first network, establishing a secure connection between the first access point and a second access point of a second network equipment attached to a second apparatus of a second network;
- launching one or several first proxies at the first access point of the first network equipment, wherein each first proxy corresponds to a terminal of the second network and is paired with at least one second proxy launched at the second access point and corresponding to a terminal of the first network.

In an embodiment, said method can further comprise receiving identification information for identifying the first access point of the first network equipment in the second network.

In an embodiment, said method can further comprise obtaining a list of one or several terminals belonging to the second network and allowed to be shared with the first network.

In an embodiment, each first proxy can correspond to a terminal of the second network which has been selected from the obtained list of terminals.

In an embodiment, said method can comprise identifying, in the first network, every first proxy launched at the first access point of the first network equipment.

In an embodiment, said method can comprise operating address translation at the first access point of the first network equipment.

In an embodiment, said method can comprise implementing the request for attachment through a certificate enrolment procedure.

In an embodiment, the secure connection can be a Generic Routing Encapsulation tunnel.

In an embodiment, said method can comprise identifying the first access point of the first network equipment thanks to a dedicated request coming from said first access point.

In an embodiment, the identification information of the first access point of the first network equipment can correspond to an IP address valid in the second network.

In an embodiment, the identification information of a terminal of the second network can correspond to its MAC address or its IP address in the second network.

In an embodiment, said method can comprise launching one or several first proxies at the first access point of the first network equipment, each first proxy corresponding to a selected terminal of the first network.

In an embodiment, the first network equipment and the second network equipment can correspond to the same network equipment.

In an embodiment, the request for attachment from the first network can be performed through an administration interface arranged in the first network equipment.

The present disclosure also directed to a first network equipment comprising a first access point and configured to be attached to a first apparatus connected to a first network,
wherein the first network equipment comprises at least one memory and at least one processing circuitry configured to perform:
- upon receipt of a request for attachment from the first network, establishing a secure connection between the first access point and a second access point of a second network equipment attached to a second apparatus of a second network;
- launching one or several first proxies at the first access point of the first network equipment, wherein each first proxy corresponds to a terminal of the second network and is paired with at least one second proxy launched at the second access point and corresponding to a terminal of the first network.

In addition, the present disclosure also concerns a first network equipment comprising a first access point and configured to be attached to a first apparatus connected to a first network,
wherein the first access point is further configured to:
- establish a secure connection between the first access point and a second access point of a second network equipment attached to a second apparatus of a second network, upon receipt of a request for attachment from the first network;
- launch one or several first proxies at the first access point of the first network equipment, wherein each first proxy corresponds to a terminal of the second network and is paired with at least one second proxy launched at the second access point and corresponding to a terminal of the first network.

In an embodiment, the first access point can be further configured to request identification information valid in the second network.

In an embodiment, the first access point can be further configured to obtain a list of one or several terminals belonging to the second network and allowed to be shared with the first network.

In an embodiment, each first proxy can correspond to a terminal of the second network which has been selected from the obtained list of terminals.

In an embodiment, every first proxy launched at the first access point can be identified in the first network.

In an embodiment, the first access point can be further configured to operate address translation.

Besides, the present disclosure is further directed to a non-transitory program storage device, readable by a computer, tangibly embodying a program of instructions executable by the computer to perform a method at a first network equipment comprising a first access point and configured to be attached to a first apparatus connected to a first network, wherein the method comprises:
- upon receipt of a request for attachment from the first network, establishing a secure connection between the first access point and a second access point of a second network equipment attached to a second apparatus of a second network;
- launching one or several first proxies at the first access point of the first network equipment, wherein each first proxy corresponds to a terminal of the second network and is paired with at least one second proxy launched at the second access point and corresponding to a terminal of the first network.

The present disclosure also concerns a computer program product stored on a non-transitory computer readable medium and comprising program code instructions executable by a processor for implementing a method at a first network equipment comprising a first access point and configured to be attached to a first apparatus connected to a first network, wherein the method comprises:
- upon receipt of a request for attachment from the first network, establishing a secure connection between the first access point and a second access point of a second network equipment attached to a second apparatus of a second network;
- launching one or several first proxies at the first access point of the first network equipment, wherein each first proxy corresponds to a terminal of the second network and is paired with at least one second proxy launched at the second access point and corresponding to a terminal of the first network.

The method according to the disclosure may be implemented in software on a programmable apparatus. It may be implemented solely in hardware or in software, or in a combination thereof.

Some processes implemented by elements of the present disclosure may be computer implemented. Accordingly, such elements may take the form of an entirely hardware embodiment, an entirely software embodiment (including firmware, resident software, micro-code, etc.) or an embodiment combining software and hardware aspects that may all generally be referred to herein as "circuit", "module" or "system". Furthermore, such elements may take the form of a computer program product embodied in any tangible medium of expression having computer usable program code embodied in the medium.

Since elements of the present disclosure can be implemented in software, the present disclosure can be embodied as computer readable code for provision to a programmable apparatus on any suitable carrier medium. A tangible carrier medium may comprise a storage medium such as a floppy disk, a CD-ROM, a hard disk drive, a magnetic tape device or a solid state memory device and the like.

The disclosure thus provides a computer-readable program comprising computer-executable instructions to enable a computer to perform the method mentioned above.

Certain aspects commensurate in scope with the disclosed embodiments are set forth below. It should be understood that these aspects are presented merely to provide the reader with a brief summary of certain forms the disclosure might take and that these aspects are not intended to limit the scope of the disclosure. Indeed, the disclosure may encompass a variety of aspects that may not be set forth below.

### BRIEF DESCRIPTION OF THE DRAWINGS

The disclosure will be better understood and illustrated by means of the following embodiment and execution examples, in no way limitative, with reference to the appended figures on which:
- Figure 1 is a schematic diagram of an example of an architecture of a network equipment adapted to implement some embodiments of the present principles;
- Figure 2 shows a schematic diagram of one embodiment depicting an interconnection of virtual gateways, according to the present principles;
- Figure 3 is a flow chart of an exemplary method for interconnecting virtual gateways together, according to the present principles;
- Figures 4 and 5 depict two exemplary arrangements of the interconnection of virtual gateways of Figure 2.

Wherever possible, the same reference numerals will be used throughout the figures to refer to the same or like parts.

### DETAILED DESCRIPTION

The following description illustrates the principles of the present disclosure. It will thus be appreciated that those skilled in the art will be able to devise various arrangements that, although not explicitly described or shown herein, embody the principles of the disclosure and are included within its scope.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the principles of the disclosure. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided with dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and nonvolatile storage.

In the claims hereof, any element expressed as a means and/or module for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

In addition, it is to be understood that the figures and descriptions of the present disclosure have been simplified to illustrate elements that are relevant for a clear understanding of the present disclosure, while eliminating, for purposes of clarity, many other elements found in typical digital multimedia content delivery methods, devices and systems. However, because such elements are well known in the art, a detailed discussion of such elements is not provided herein. The disclosure herein is directed to all such variations and modifications known to those skilled in the art.

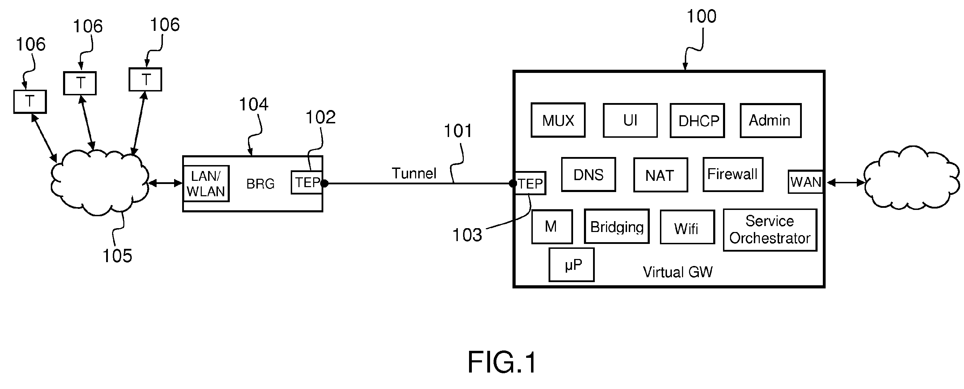

Figure 1 is a schematic diagram of an example of an architecture of a remote network equipment 100, such as a virtual gateway (vG) or a virtual customer premise equipment (VCPE) and of a local network equipment 104, such as a broadband residential gateway (BRG). It is assumed that the gateway functionality is split in two parts, interconnected by mean of a tunnel 101, each part hosting a tunnel endpoint (TEP) 102, 103. This tunnel can be used to abstract from the underlying physical network topology while interconnecting the broadband residential gateway (BRG) 104 (also called bridge or switch) and the virtual gateway (vG) 100 at the link layer.

The left hand side (represented by the broadband residential gateway 104 (BRG)) can be considered, in one embodiment, to be at the customer's premises, whereas the right hand side (represented by the virtual gateway 100) can be located in a datacenter hosted, for instance, by a network operator. This datacenter can be distributed across multiple locations. In one embodiment, virtualized gateway functions can be shared (or mutualized) by a plurality of home LANs to facilitate scaling and maintenance. The BRG 104 can be connected to a home (or business) network 105 (e.g. private network) such a LAN (Local Area Network) or WAN (Wide Area Network).

Virtual gateway deployment can be managed by a service orchestrator that coordinates the computing and networking configuration from the broadband residential gateway 104 to the datacenter hosting the virtual gateway 100 to manage virtual gateway migration, network service and functions addition/removal or adjustment of QoS policies.

As shown in Figure 1, the virtual gateway 100 can execute network functions such as UI (User Interface), DHCP server, DNS server, Firewall, NAT (Network Address Translation), etc.

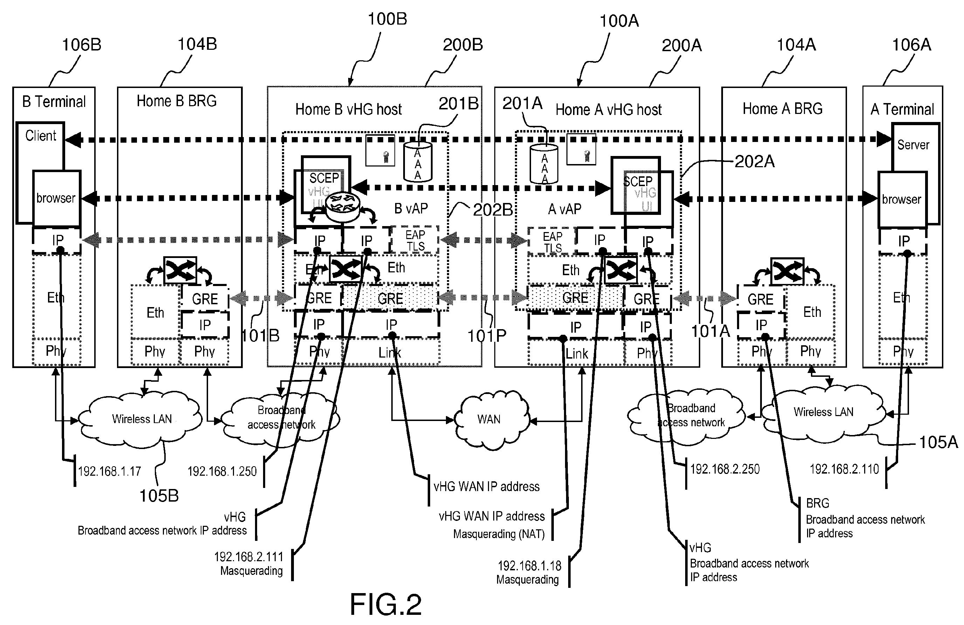

Figure 2 is a schematic diagram of one embodiment, depicting the interconnection of two virtual gateways 100A and 100B according to the present principles. For sake of clarity and simplicity, some elements of the virtual gateway are not shown in Figure 2.

In the exemplary embodiment of Figure 2, each virtual gateway 100A, 100B can be connected to one or several broadband residential gateways 104A, 104B (for sake of clarity, only one BRG 104A, 104B is associated with each vG 100A, 100B). Each BRG 104A, 104B can be attached to a local area network (LAN) 105A, 105B comprising one or several terminals 106A, 106B (only one is represented in Figure 2).

At the input in the datacenter, a multiplexing function MUX (shown in Figure 1) of each virtual gateway 100A, 100B can be provided to ensure connectivity between a physical broadband residential gateway 104A, 104B and the associated virtual gateway functions. The multiplexing function can be configured by the orchestrator with the customer's settings. This function can be implemented, for example, by a programmable switch, which may also provide connectivity to the WAN and cloud hosted services. In one embodiment, it is assumed this to be a large capacity switching arrangement, possibly assisted by dedicated hardware. It can handle the termination of the tunnel towards each BRG 104A, 104B and can re-encapsulate the traffic towards the peer vG services or tag the traffic with a customer ID before passing it to a shared service. As shown in the embodiment of Figure 1, the multiplexing function can implement a tunnel end point (TEP) 103 and can re-encapsulate the traffic in a dedicated VxLAN (Virtual Extensible Local Area Network) for each customer.

Configuring the switching according to rules derived from customer specific preferences can allow building a service chain, connecting inputs and outputs of services. At a high level, gateway directed traffic can be switched to the adequate services (DHCP, DNS), whereas WAN directed traffic is switched toward NAT or firewall services.

Each BRG 104A, 104B can be built around its own switching fabric (e.g., switching arrangement or configuration such as a switching matrix), that interconnects the different network ports. Each BRG 104A, 104B can implement in particular the logic for enabling Generic Routing Encapsulation (GRE) tunneling between each BRG 104A, 104B and a VCPE 100A, 100B. The GRE tunneling can be configured through an existing procedure (consecutively to a provisioning operation realized by the operator) like the one specified by Broadband Forum. Once a BRG 104A, 104B is connected to the access network, after the physical attachment (e.g. xDSL), the BRG 104A, 104B can broadcast a DHCP request. This is caught by the DHCP server residing in the first upstream IP enabled device, which may be the Broadband Network Gateway (BNG, the old BRAS). The DHCP server 201 A, 201 B (more exactly its associated AAA (Authentication, Authorization, Accounting) server) can authenticate the BRG 104A, 104B thanks to its MAC (Media Access Control) address and return the corresponding configuration. This corresponding configuration can include the BRG IP address and the GRE tunnel endpoint IP address that is the IP address of the virtual machine hosting the tunnel end point (TEP) virtual function of the virtual gateway 100A, 100B.

Once the network configuration is obtained, each BRG 104A, 104B can be configured to provide tunnel access 101 A, 101 B (e.g. a GRE tunnel interface) while the corresponding virtual gateway 100A, 100B can be automatically configured in the virtual gateway host infrastructure.

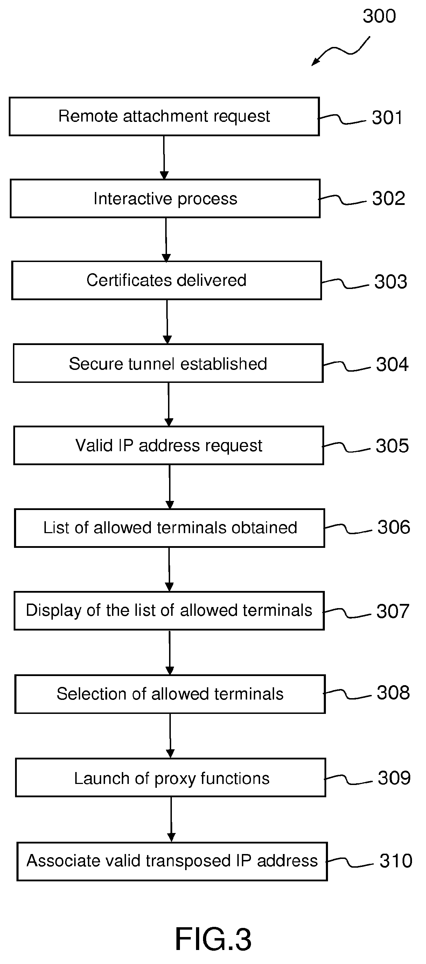

As shown in the exemplary method 300 of Figure 3, in order to connect the local area network LAN 105B together with local area network 105A, a subscriber B of the LAN 105B (e.g. a user of a terminal 106B) can request (step 301) a remote attachment operation with the LAN 105A through, for instance, a certificate enrollment procedure (e.g. using the Simple Certificate Enrollment Protocol, or SCEP protocol). To this end, the requesting subscriber B of LAN 105B can provide identification data (such as a public name, which can be derived from the public domain name) of the virtual gateway 100A attached to the BRG 104A connected to the LAN 105A.

Such a remote attachment operation can be requested, by the requesting subscriber B, through an administration interface (e.g. a user interface), for instance accessible via a terminal 106B of the LAN 105B.

At step 302, the request of a remote attachment operation can trigger an interactive process between the requesting subscriber B and a subscriber A of the LAN 105A, wherein the requesting subscriber B and the subscriber A interact each other via their respective administration interface to agree on the scope of interconnection. In particular, several configuration cases can be contemplated:
- subscribers B and A agree that the whole LAN 105B be connected to the whole LAN 105A;
- subscribers B and A agree that at least one identified terminal belonging to LAN 105B be connected to the whole LAN 105A;
- subscribers B and A agree that at least one identified terminal belonging to LAN 105B be connected to at least one identified terminal belonging to LAN 105A;
- subscribers B and A agree that the whole LAN 105B be connected to at least one identified terminal of LAN 105A.

After mutual agreement on the remote attachment, in case the subscriber A accepts the interconnection (or peering) of LAN 105A with LAN 105B based on one of the above mentioned configuration cases, the virtual access point (VAP) 202A of the vG 100A (corresponding to a network function) can deliver (step 303) a certificate to the virtual access point 202B of vG 100B according to, for instance, the SCEP protocol and vice versa.

At step 304, the delivered certificates can be used to establish a secure tunnel 101 P (e.g. relying on the GRE protocol) between the virtual gateways 100B and 100A, comprising virtual access points (VAP) 202A and 202B handling, for instance, the Extensible Authentication Protocol (or EAP protocol) for mutual authentication and common encryption.

It has to be noted that, to end the peering between LAN 105A and LAN 105B, the requesting subscriber B can revoke the certificate associated with the subscriber A though, for instance, the administration interface of the virtual gateway 100B.

The VAP 202B of the vG 100B can be viewed as a remotely connected terminal by the VAP 202A of the vG 100A.

Once the GRE tunnel 101P for peering both VAPs 202A and 202B is established (step 304), the VAP 202B of the vG 100B can request (step 305) an IP address valid in the LAN 105A through the DHCP protocol (in the example of Figure 2, the VAP 202B receives the address 192.168.2.110). Naturally, the present principles are not limited to a valid IP address, other identification information valid in the LAN 105A can be used.

In a step 306, the VAP 202B can obtain a list of the terminals 106A attached to LAN 105A and which can be accessed from the LAN 105B (hereinafter called allowed terminal). In a variant, the VAP 202B can obtain a list of all terminals belonging to LAN 105A.

The VAP 202B can further obtain the MAC address of terminals 106A (e.g embedded in an Address Resolution Protocol (ARP) request). By operating reverse ARP, the VAP 202B can retrieve the corresponding IP address of each of allowed terminal 106A.

The VAP 202A of the vG 100A can also implement the step 306 to obtain IP address of allowed terminals 106B.

At the end of this query process (step 306), the VAP 202B of the vG 100B has a list of allowed terminals 106A of the LAN 105A with the following information (for each terminal 106A):
- IP address valid in LAN 105A, default gateway (optional) in LAN 105A and Domain name server in LAN 105A if existing;
- MAC address.

The VAP 202A of the vG 100A obtains similar information for allowed terminals 106B of the LAN 105B.

In a step 307, the list of terminals 106A can then be accessible and/or displayed to the requesting subscriber B through the administration interface of the vG 100B.

From the list of allowed terminals 106A, the subscriber B can decide (step 308) with which allowed terminals 106A of LAN 105A to interact with. Similarly, the list of terminals 106B is accessible and/or displayed to the subscriber A. In a variant, the determination of terminal to be shared can be performed in a preliminary step, by configuring the VAPs.

When the allowed terminals 106A and 106B are selected by the subscriber B and the subscriber A respectively (step 308), the VAP 202B of the vG 100B can launch (or instantiate) (step 309) one or several proxies (or proxy functions, also called virtual terminals) associated with the selected allowed terminals 106A of LAN 105A. Thus, every proxy (also called A proxy) represents a selected terminal 106A at the VAP 202B. The A proxies are coupled with LAN 105B. The VAP 202A can also implement step 309 to establish a proxy (also called B proxy) for every selected terminal 106B of LAN 105B to share with users of terminals 106A of LAN 105A. The B proxies are coupled with LAN 105A.

It should be noted that every A proxy 203B launched at the VAP 202B is paired with one or several corresponding B proxies 203A launched at the VAP 203A.

At step 310, in order to avoid any problem related to IP address collision (since LAN 105A and LAN 105B may operate the same IP address ranges, such as 192.168.1.0/24), VAP 202B can associate with every A proxy (launched at VAP 202B, step 309) a transposed IP address valid in LAN 105B (i.e. in the IP address space of LAN 105B). To this end, VAP 202B can operate the DHCP service to submit a DHCP request in LAN 105B per launched A proxy hosted at VAP 202B (representing a terminal 106A of LAN 105A).

Alternatively, VAP 202B can use a provisioned subset of IP addresses (e.g. 192.168.1.0/28), never used by the DHCP server (e.g. 192.168.0.0/16) controlled by the vG 100B for serving LAN 105B. Such an alternative can make easier subsequent network address translation.

Similarly, VAP 202A can also implement step 310 to allocate a transposed IP address valid in LAN 105A to each established B proxy (representing a terminal 106B of LAN 105B).

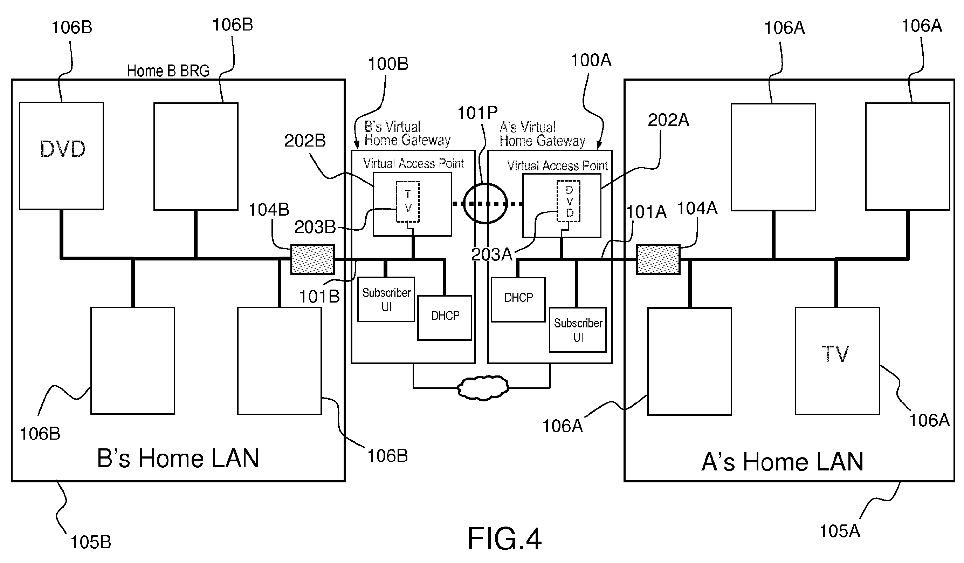

Figure 4 provides an example where the virtual gateways 100A and 100B (as the ones provided in conjunction with Figure 2) are interconnected upon request from a subscriber B, from implementation of the method 300 of Figure 3. In this example, one terminal 106B (e.g. a DVD player) of LAN 105B is shared with LAN 105A, and one terminal 106A (e.g. a TV) of LAN 105A is shared with LAN 105B. An A proxy 203B representing the TV of LAN 105A is instantiated at VAP 202B of vG 100B and a B proxy 203A representing the DVD player of LAN 105B is launched at VAP 202A of vG 100A. In this example, the A proxy 203B (TV) is paired with the B proxy 203A (DVD).

Whenever the DVD player 106B in LAN 105B wants to resolve the IP address corresponding to the TV proxy 203B (through an ARP request), VAP 202B can reply to the ARP request.

Data packets coming from the DVD player 106B and traveling over LAN 105B to the TV 106A of LAN 105A can embed the following headers:
- as destination IP address: the IP address of the TV proxy 203B (at the VAP 202B) representing the destination terminal 106A in LAN 105A, i.e. the TV;
- as destination MAC address: either the MAC address of the destination terminal 106A (i.e. the TV) or the MAC address of the VAP 202B associated with the TV proxy 203B;
- as source IP address: the IP address of the source terminal 106B of LAN 105B (i.e. the DVD player).

The TV proxy 203B at VAP 202B can route the packets towards the VAP 202A (through the GRE tunnel 101P) applying first the following network address translation:
- the destination IP address (TV proxy 203B, at the VAP 202B, representing the TV 106A) is replaced with the corresponding IP address of the destination terminal 106A in LAN 105A (i.e. the TV);
- the destination MAC address either remains unchanged (when it corresponds to the MAC address of the destination terminal 106A, i.e. the TV), or is changed to the MAC address of the destination terminal 106A (in case the MAC address of the VAP 202B associated with the A proxy 203B is considered).

The DVD proxy 203A at VAP 202A (representing the DVD player 106B) can receive the packets having the source IP address corresponding to the source terminal 106B (i.e. the DVD). The DVD proxy 203A at VAP 202A can then forward the packets to the destination terminal 106A (i.e. the TV) (according to the destination IP address or the packet) applying first the following network address translation:
- the source IP address (the IP address of the DVD 106B) is replaced with the corresponding IP address of the DVD proxy 203A (at VAP 202A) valid in LAN 105A;
- the source MAC address either remains unchanged (it corresponds to the DVD MAC address) or it is set with the MAC address of the DVD proxy 203A associated with VAP 202A.

On the way back, by assuming that the TV 106A in LAN 105A sends back a response packet to the DVD proxy 203A in VAP 202A, said response packet can gather the following headers:
- as destination IP address: the IP address of the DVD proxy 203A at VAP 202A;
- as destination MAC address: either the MAC address of the DVD 106B or the MAC address of the DVD proxy 203A associated with VAP 202A;
- as source IP address, the IP address of the TV 106A of LAN 105A;
- as source MAC address: the MAC address of the TV 106A.

When reaching the DVD proxy 203A hosted by the VAP 202A, the response packet can be routed back to the TV proxy 203B hosted by the VAP 202B applying first the following translations:
- the destination IP address (the DVD proxy 203A (VAP 202A) IP address) is replaced with the corresponding IP address of the DVD player 106B in LAN 105B;
- the destination MAC address either remains unchanged (when it corresponds to the DVD player MAC address) or is changed to the DVD player MAC address (in case the MAC address of the DVD proxy 203B associated with the VAP 202A is considered).

When the VAP 202B hosting TV proxy 203B receives the considered packet (the source IP address correspond to TV terminal 106A of LAN 105A), said packet is routed back to the DVD player 106B of LAN 105B applying first the following translations:
- the source IP address (the IP address of the TV terminal 106A) is replaced with the IP address of the TV proxy 203B associated with VAP 202B (valid in LAN 105B);
- the source MAC address remains unchanged (the TV MAC address).

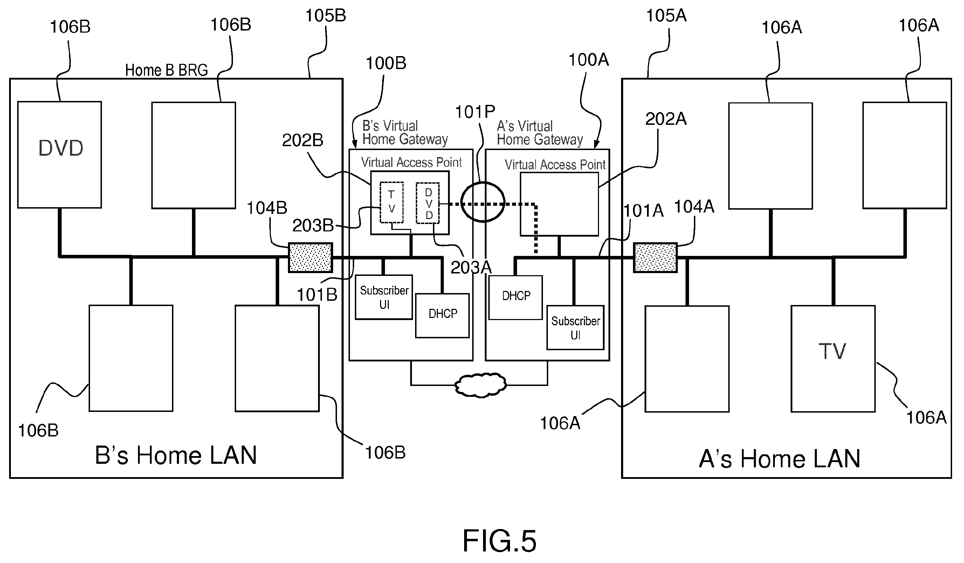

By contrast with Figure 4, in the example of Figure 5, the VAP 202B hosts both proxies 203A and 203B representing respectively the DVD player 106B of LAN 105B and the TV 106A of LAN 105A. The DVD proxy 203A is launched at VAP 202B. The VAP 202A - if it exists - does not host any proxy. This is therefore to the VAP 202B to manage the proxies TV and DVD and the address transposition process for traffic going back and forth between LAN 105B and LAN 105A. In another embodiment, the hosting of proxies representing remote terminals can also be subject to negotiation.

In addition, further filtering operations can be required to avoid service redundancy and address collisions:
- DNS requests can be filtered in order not to cross the VAPs;
- DHCP requests can be served by the local DHCP server only;
- multicast traffic does cross the VAPs when generated by shared terminals 106A or 106B (i.e. MAC address corresponds to one of selected shared terminal);
- broadcast traffic does not cross the VAPs.

In the Figures, it is to be appreciated that the illustrated blocks or modules can correspond to functional modules, which may or may not correspond to distinguishable physical units. For example, a plurality of such modules may be associated in a unique component or circuit, or correspond to software functionalities. Moreover, a module may potentially be composed of separate physical entities or software functionalities.

References disclosed in the description, the claims and the drawings might be provided independently or in any appropriate combination. Features may be, where appropriate, implemented in hardware, software, or a combination of the two.

Reference herein to "one embodiment" or "an embodiment" means that a particular feature, structure, or characteristic described in connection with the embodiment can be included in at least one implementation of the method and device described. The appearances of the phrase "in one embodiment" in various places in the specification are not necessarily all referring to the same embodiment, nor are separate or alternative embodiments necessarily mutually exclusive of other embodiments.

Reference numerals appearing in the claims are by way of illustration only and shall have no limiting effect on the scope of the claims.

Although certain embodiments only of the disclosure have been described herein, it will be understood by any person skilled in the art that other modifications, variations, and possibilities of the disclosure are possible. Such modifications, variations and possibilities are therefore to be considered as falling within the spirit and scope of the disclosure and hence forming part of the disclosure as herein described and/or exemplified.

The flowchart and/or block diagrams in the Figures illustrate the configuration, operation and functionality of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, or blocks may be executed in an alternative order, depending upon the functionality involved. It will also be noted that each block of the block diagrams and/or flowchart illustration, and combinations of the blocks in the block diagrams and/or flowchart illustration, can be implemented by special purpose hardware-based systems that perform the specified functions or acts, or combinations of special purpose hardware and computer instructions. While not explicitly described, the present embodiments may be employed in any combination or sub-combination.

## Claims

1. Method to be implemented at a first network equipment (100B) comprising a first access point (202B) and configured to be attached to a first apparatus (104B) connected to a first network (105B),
wherein the method comprises:
- upon receipt (301) of a request for attachment from the first network (105B), establishing (304) a secure connection (101P) between the first access point (202B) and a second access point (202A) of a second network equipment (100A) attached to a second apparatus (104A) of a second network (105A);
- launching (309) one or several first proxies (203B) at the first access point (202B) of the first network equipment (100B), wherein each first proxy (203B) corresponds to a terminal (106A) of the second network (105A) and is paired with at least one second proxy (203A) launched at the second access point (202A) and corresponding to a terminal (106B) of the first network (105B).

2. Method according to claim 1, further comprising receiving (305) identification information for identifying the first access point (202B) of the first network equipment (100B) in the second network (105A).

3. Method according to claim 1 or 2, comprising obtaining (306) a list of one or several terminals (106A) belonging to the second network (105A) and allowed to be shared with the first network (105B).

4. Method according to claim 3, wherein each first proxy (203B) corresponds to a terminal (106A) of the second network (105A) which has been selected from the obtained list of terminals (106A).

5. Method according to claims 1 to 4, comprising identifying (310), in the first network (105B), every first proxy (203B) launched at the first access point (202B) of the first network equipment (100B).

6. Method according to claims 1 to 5, comprising operating address translation at the first access point (202B) of the first network equipment (100B).

7. First network equipment (100B) comprising a first access point (202B) and configured to be attached to a first apparatus (104B) connected to a first network (105B),
wherein the first network equipment comprises at least one memory and at least one processing circuitry configured to perform:
- upon receipt (301) of a request for attachment from the first network (105B), establishing (304) a secure connection (101P) between the first access point (202B) and a second access point (202A) of the second network equipment (100A) attached to a second apparatus (104A) of a second network (105A);
- launching (309) one or several first proxies (203B) at the first access point (202B) of the first network equipment (100B), wherein each first proxy (203B) corresponds to a terminal (106A) of the second network (105A) and is paired with at least one second proxy (203A) launched at the second access point (202A) and corresponding to a terminal (106B) of the first network (105B).

8. First network equipment (100B) comprising a first access point (202B) and configured to be attached to a first apparatus (104B) connected to a first network (105B),
wherein the first access point (202B) is further configured to:
- establish a secure connection (101 P) between the first access point (202B) and a second access point (202A) of a second network equipment (100A) attached to a second apparatus (104A) of a second network (105A), upon receipt (301) of a request for attachment from the first network (105B);
- launch one or several first proxies (203B) at the first access point (202B) of the first network equipment 100B), wherein each first proxy (203B) corresponds to a terminal (106A) of the second network (105A) and is paired with at least one second proxy (203A) launched at the second access point (202A) and corresponding to a terminal (106B) of the first network (105B).

9. First network equipment according to claim 8, wherein the first access point (202B) is further configured to request identification information valid in the second network (105A).

10. First network equipment according to claim 8 or 9, wherein the first access point (202B) is further configured to obtain a list of one or several terminals (106A) belonging to the second network (105A) and allowed to be shared with the first network (105B).

11. First network equipment according to claim 10, wherein each first proxy (203B) corresponds to a terminal (106A) of the second network (105A) which has been selected from the obtained list of terminals (106A).

12. First network equipment according to claims 9 to 11, wherein every first proxy (203B) launched at the first access point (202B) are identified in the first network (105B).

13. First network equipment according to claims 9 to 12, wherein the first access point (202B) is further configured to operate address translation.

14. Non-transitory program storage device, readable by a computer, tangibly embodying a program of instructions executable by the computer to perform a method at a first network equipment (100B) comprising a first access point (202B) and configured to be attached to a first apparatus (104B) connected to a first network (105B), wherein the method comprises:
- upon receipt (301) of a request for attachment from the first network (105B), establishing (304) a secure connection (101P) between the first access point (202B) and a second access point of a second network equipment (100A) attached to a second apparatus (104A) of a second network (105A);
- launching (309) one or several first proxies (203B) at the first access point (202B) of the first network equipment (100B), wherein each first proxy (203B) corresponds to a terminal (106A) of the second network (105A) and is paired with at least one second proxy (203A) launched at the second access point (202A) and corresponding to a terminal (106B) of the first network (105B).

15. Computer program product stored on a non-transitory computer readable medium and comprising program code instructions executable by a processor for implementing a method at a first network equipment (100B) comprising a first access point (202B) and configured to be attached to a first apparatus (104B) connected to a first network (105B), wherein the method comprises:
- upon receipt (301) of a request for attachment from the first network (105B), establishing (304) a secure connection (101P) between the first access point (202B) and a second access point (202A) of a second network equipment (100A) attached to a second apparatus (104A) of a second network (105A);
- launching (309) one or several first proxies (203B) at the first access point (202B) of the first network equipment (100B), wherein each first proxy (203B) corresponds to a terminal (106A) of the second network (105A) and is paired with at least one second proxy (203A) launched at the second access point (202A) and corresponding to a terminal (106B) of the first network (105B).
